# EUROPÄISCHE PATENTANMELDUNG

(11) **EP 1 389 708 A2**
(43) Veröffentlichungstag der Anmeldung: **18.02.2004**
(21) Anmeldenummer: 03400044.8
(22) Anmeldetag: 14.08.2003
(51) Int. Cl.: F16S 3/00, B27K 3/00, B27N 3/00, B27M 3/00, B29C 47/00, F24J 2/46, E04C 3/12, E06B 3/10

(54) **Im Aussenbereich angebrachter Gegenstand**

(30) Priorität: 14.08.2002 DE 10237926
(71) Anmelder: Nau GmbH Umwelt- und Energietechnik, 85368 Moosburg (DE)
(72) Erfinder: Heinrich, Harald, 84076 Pfeffenhausen (Oberlauterbach) (DE); Hirsch, Thomas, 84028 Landshut (DE); Steinwender, Alois, 84028 Landshut (DE)
(74) Vertreter: Castell, Klaus, Dr.-Ing.

(57) **Zusammenfassung**

Die Erfindung schlägt einen im Außenbereich angebrachten Gegenstand vor, der ein thermoplastisch verformbares Formteil aufweist, das eine Holzmatrix und einen thermoplastischen Werkstoff aufweist. Zudem werden Verbindungstechniken und Verwendungsarten für den Gegenstand sowie in einem Ausführungsbeispiel ein Rahmenprofil für einen Solarkollektor offenbart.

## Beschreibung

Die Erfindung betrifft einen im Außenbereich angebrachten Gegenstand.

In vielen Bereichen des öffentlichen und privaten Umfelds stellt sich die Aufgabe, Gegenstände im Außenbereich anzubringen. Beispielhaft seien hier nur Zäune, Rollläden, Pergolas, Carport-Abdeckungen, Ladebordwände, Wegweiser, Warmwasserkollektoren oder Photovoltaikkollektoren benannt.

Je nach den gewünschten Eigenschaften der für den Außenbereich bestimmten Gegenstände findet an und in diesen Gegenständen eine große Vielzahl von verschiedenen Werkstoffen Verwendung. Aufgrund der hohen Beanspruchungen im Außenbereich werden jedoch spezielle Anforderungen an die Werkstoffe gestellt. So müssen sie beispielsweise Wind, Wärme, Kälte, Frost, Regen, kontaminierter Luft sowie UV-Strahlung möglichst lange widerstehen können. Häufig ausgewählte Werkstoffe für solche Gegenstände sind daher insbesondere Aluminium, nicht korrodierende Metalle und reine Kunststoffe. Holz bzw. Holzwerkstoffe können zwar auch angewendet werden, jedoch muss hierbei die Einbausituation so ausgeführt werden, dass das Holz nicht der direkten Bewitterung ausgesetzt ist oder aber zumindest durch spezielle oberflächenbehandelnde Maßnahmen hierauf vorbereitet ist.

Die endgültige Auswahl von Werkstoffen für einen im Außenbereich angebrachten Gegenstand unterliegt vielfältigen Einflüssen und kann nicht pauschal getroffen werden. Für jeden Einzelfall ist eine genaue Definition der Zielsetzung, die mit dem Gegenstand verbunden ist, notwendig. So sind oft in der Funktion identische Produkte zu finden, die jedoch unterschiedliche Zielsetzungen verfolgen und demzufolge aus unterschiedlichen Werkstoffen hergestellt sind. Beispielhaft für den privaten wie öffentlichen Bereich können hier Wegeleuchten genannt werden, die es sehr preiswert, aber auch eher kurzlebig, aus Kunststoff oder alternativ aus Metall gibt. In der letztgenannten Form sind sie zwar eher langlebig, dafür aber auch entsprechend kostspielig.

Wie auch hier exemplarisch gezeigt, liegt ein Problem bei der Auswahl von Werkstoffen gerade für Gegenstände für den Außenbereich darin, dass sich viele der angestrebten Ziele widersprechen und im Normalfall Kompromisse unumgänglich sind:

So ist eines der vorrangigen Ziele nahezu immer in einer großen Robustheit des Gegenstands zu sehen. Hiermit verbindet sich eine lange Lebensdauer des Gegenstands, wodurch eine Anschaffung regelmäßig rentabler wird. Dieses Ziel erfüllen unter den meisten Umständen insbesondere alle Ausführungen aus Aluminium oder nicht korrodierenden Metallen.

Gerade in der jüngeren Vergangenheit hat aber auch das Umweltbewusstsein im öffentlichen wie privaten Bereich stark zugenommen. Bei der Auswahl von Werkstoffen wird daher nun gesteigerter Wert auch auf die biologische Verträglichkeit des Gegenstands gelegt. So soll er möglichst gut zu entsorgen sein und auch in möglichst hohem Maß aus regenerativen Komponenten bestehen. Ein Werkstoff, der dieses Ziel in hohem Maße erfüllt, ist Holz.

Zudem wird auch eine natürliche Optik in vielen Fällen angestrebt. Auch hier kommt Holz eine sehr vorteilhafte Eignung zu. Leider ist Holz aber nur einer sehr beschränkten Anzahl von Verarbeitungsverfahren zugänglich. So können beispielsweise Profilformteile kaum mit vertretbarem Aufwand aus Holzwerkstoffen hergestellt werden. An dieser Stelle zeigen sich insbesondere die Vorteile von reinen Kunststoffen, die kontinuierlich - beispielsweise durch Extrusion - verarbeitet und somit meist preisgünstig zur Fertigung von beliebigen Gegenständen verwendet werden können.

So ist man bei der Auswahl von Werkstoffen für im Außenbereich angebrachte Gegenstände in den meisten Fällen auch bei sorgfältiger Auswahl dazu gezwungen, einige der genannten Nachteile hinzunehmen.

Der Erfinder hat sich daher die Aufgabe gestellt, Gegenstände für die Anbringung im Außenbereich mit einem Material zu entwickeln, mit dem gleichzeitig eine große Robustheit und die bisher widersprüchlichen Ziele Bioverträglichkeit und Formbarkeit erreicht werden können.

Die Aufgabe löst ein im Außenbereich angebrachter Gegenstand, der ein thermoplastisch verformbares Formteil aufweist, das eine Holzmatrix und einen thermoplastischen Werkstoff aufweist.

Diese Lösung konnte nicht erwartet werden. Der hier eingesetzte Werkstoff ist insbesondere aus der AT 404 106 B bekannt. Diese Druckschrift stellt jedoch explizit nur auf möglichst witterungsgeschützte Anwendungsbereiche ab. Expressis verbis werden hier die Einsatzbereiche Fahrzeugbau, Fußboden, Holzbau, Innenausbau, Möbelbau, Spielwaren und Verpackung genannt.

Entgegen den aus Vorurteilen über holzbasierte Werkstoffe zu erwartenden Ergebnissen wurde eine aufwändige Werkstoffuntersuchung speziell für die Anwendung im Außenbereich durchgeführt. Hierbei hat sich überraschenderweise insbesondere herausgestellt, dass sich diese Werkstoffe in der Form, in der die Erfindung sie verwendet, auch hervorragend unter permanenter Witterungsaussetzung bewähren. Hieraus hergestellte Gegenstände lassen sich demzufolge sehr gut im Außenbereich einsetzen. Die überraschend hohe Lebensdauer solcher Gegenstände von prognostizierten bis zu 25 Jahren prädestiniert den Werkstoff sogar für Gegenstände, die im Außenbereich fest angebracht sind.

In einer vorteilhaften Ausführung weist der erfindungsgemäße Gegenstand ein extrudiertes Formteil auf. Da der vorgeschlagene Werkstoff der Extrusion zugänglich ist, können hiermit benötigte Formteile in hohem Maße automatisiert hergestellt werden. Insbesondere eine kontinuierliche Produktion kann hierbei zu großen Kosteneinsparungen und einer sehr konstanten Produktqualität führen. Gerade für Bauelemente, die als Profil erzeugt werden müssen, bietet sich die Extrusion als Herstellungsverfahren an.

Kumulativ hierzu bietet es sich an, dass das extrudierte Formteil tiefgezogen ist. Beispielsweise kann das extrudierte Formteil eine im Wesentlichen flächige Form oder eine ausgeprägte Plattenform haben und in einem nachgeschalteten Arbeitsgang zu einer anderen Form, beispielsweise zu einer Gehäusewanne, tiefgezogen werden.

In einer weiteren vorteilhaften Ausführung weist der erfindungsgemäße Gegenstand zusätzlich zu dem extrudierten Formteil ein mittels Coextrusion mit diesem extrudierten Formteil geformtes Passformteil auf. Dies ist vor allem bei der Herstellung von Profilen interessant, denn durch dieses Herstellungsverfahren können auf möglichst einfache, kostengünstige Weise zwei miteinander wirkende extrudierte Profilteile aus verschiedenen Materialien hergestellt werden.

Davon unberührt bietet es sich vorteilhaft an, dass das thermoplastisch verformbare Formteil des erfindungsgemäßen Gegenstandes eine spiegelgeschweißte Verbindung mit einem weiteren Formteil aufweist. Durch Einsatz des Spiegelschweißens wird eine sehr praktische Verbindungstechnik angewendet. Diese Verbindungstechnik wurde bisher in Verbindung mit dem in der Erfindung verwendeten Material noch nicht eingesetzt. Im Rahmen der Untersuchungen wurden jedoch auch hierzu gezielt Tests durchgeführt. Diese haben ergeben, dass das Material dem Spiegelschweißen sehr gut zugänglich ist.

Ebenso vorteilhaft kann es sein, wenn das thermoplastisch verformbare Formteil des erfindungsgemäßen Gegenstands eine geklebte Verbindung mit einem weiteren Formteil aufweist. Auch diese Verbindungstechnik ist sehr praktisch, wurde aber bisher in Verbindung mit dem in der Erfindung verwendeten Material noch nicht angewandt. Die Zugänglichkeit des Materials zum Klebeverbinden hat sich ebenfalls als Ergebnis von gezielten, hierauf abzielenden Tests im Rahmen der angesprochenen Untersuchung gezeigt.

In einer weiteren vorteilhaften Ausgestaltung zeichnet sich der erfindungsgemäße Gegenstand dadurch aus, dass er ganzjährig der Witterung ausgesetzt werden kann, ohne seine maßgebende Funktion zu verlieren. In der Vielzahl der möglichen Kombinationen von Hölzern und thermoplastischen Werkstoffen sind auch Kombinationen möglich, mit denen der im Außenbereich angebrachte Gegenstand der Witterung nicht ausreichend lange standhalten kann, ohne seine Funktion zu verlieren. Es sind daher eine Materialauswahl und eine Materialrezeptur zu treffen, die gegenüber den gewählten Einzelbestandteilen vorteilhafte Kombinationen beispielsweise in Bezug auf Temperaturbeständigkeit oder mechanische Eigenschaften ergeben. So kann beispielsweise durch die Verwendung von Zelluloseacetat als thermoplastischer Werkstoff der biologische Abbau des Gesamtwerkstoffs gegenüber demjenigen der reinen Holzmatrix im allgemeinen verlangsamt werden.

Darüber hinaus wird vorgeschlagen, dass zumindest ein Teil der der Witterung ausgesetzten Oberfläche des thermoplastisch verformbaren Formteils seit seiner Formgebung unbehandelt ist. Übliche Behandlungsformen von Holzwerkstoffoberflächen, die für den Einsatz im Außenbereich präpariert werden müssen, sind zum Beispiel farbige Lackierungen oder Imprägnierungen. Beide gehen jedoch mit zusätzlichen Maßnahmen, insbesondere Lackierung, nach der Formgebung einher, wodurch bei der Produktion des Gegenstands zusätzliche Kosten anfallen. Hingegen ist es ebenfalls Ergebnis der nun durchgeführten Materialprüfungen, dass bei günstiger Auswahl der Werkstoffkomponenten das erfindungsgemäße thermoplastisch verformbare Formteil auch ohne weitere Oberflächenbehandlung in der Lage ist, der Witterung für eine überraschend lange Zeit zu widerstehen. Sowohl das Aussehen als auch die Funktion des Gegenstands büßen mit diesem Werkstoff überraschenderweise nur in geringen Umfang durch die physikalische Beanspruchung ein. Zusätzlich zu der Möglichkeit, den Gegenstand günstiger produzieren zu können, muss erwähnt werden, dass auch die Biokompatibilität durch Wegfall einer Oberflächenbehandlung regelmäßig steigen wird. Auch wird eine Auswahl eher auf den erfindungsgemäßen Gegenstand fallen, da guten Gewissens davon ausgegangen werden kann, dass der Werkstoff natürlich nachwächst.

Der erfindungsgemäße Gegenstand kann zudem vorteilhaft an einer Außenhülle eines Gebäudes angebracht sein. Hierdurch können verschiedene Zwecke verfolgt werden. Zum einen kann es von großem Vorteil sein, den erfindungsgemäßen Gegenstand an einer Außenhülle eines Gebäudes zu befestigen, wenn beispielsweise ein Kabel oder eine anders geartete Leitung den Gegenstand und das Gebäude verbinden muss. Zum anderen ist ein derart angebrachter Gegenstand einem Diebstahl oder einer mutwilligen Beschädigung unter Umständen weniger ausgesetzt. Insbesondere durch Installation des erfindungsgemäßen Gegenstands in größerer Höhe am Gebäude, gegebenenfalls sogar auf dem Dach des Gebäudes, kann der Gegenstand im Allgemeinen der Erreichbarkeit durch einen Menschen ohne weitere Hilfsmittel entzogen werden. Auch bei den Anblick des Gebäudes ästhetisch beeinträchtigenden Gegenständen kann es sich anbieten, diese in einer größeren Höhe oder ebenfalls auf dem Dach des Gebäudes anzubringen. Im Einzelfall muss die Wahl des Orts der Anbringung aber selbstverständlich der Funktion des Gegenstandes folgen.

Je nach der Aufgabe des erfindungsgemäßen Gegenstands kann es von Vorteil sein, dass er eine im Wesentlichen flächige Form hat und die Projektion der Normalen zu dieser flächigen Form in die Horizontale mit der Himmelsrichtung, in welcher vom Ort der Anbringung aus gesehen die Sonne ihren Höchststand hat, einen Winkel zwischen 0° und 45° einschließt. Ebenso gewinnbringend kann es sein, dass der erfindungsgemäße Gegenstand eine im Wesentlichen flächige Form hat und die Normale zu dieser flächigen Form mit der Horizontalen einen Winkel zwischen 10° und 90° einschließt. Von Vorteil ist dies insbesondere bei Gegenständen, die funktionsbedingt in größtmöglichem Maße zur Sonne ausgerichtet sein sollen. Durch eine Ausrichtung mit den beschriebenen Parametern in den genannten Grenzen wird erreicht, dass der Gegenstand der Strahlung der Sonne bestmöglich ausgesetzt ist.

Ein weiterer Vorteil des erfindungsgemäßen Gegenstands kommt zum Tragen, wenn das Profilteil eine Fluidleitung berührt, deren Oberfläche regelmäßig eine Temperatur oberhalb von 80 °C annimmt. Gerade in Verwendungsbereichen mit dermaßen hohen physikalischen Belastungen ist der erfindungsgemäße Gegenstand großen Nutzen bringend einsetzbar. Bei dermaßen belasteten Bauteilen, wie sie beispielsweise bei Warmwasserkollektoren zu finden sind, kommen bisher sehr aufwendig herzustellende, teure und biologisch unverträglichere Materialien zum Zug. Hingegen ist die regelmäßige Aufheizung eines Profilteils des erfindungsgemäßen Gegenstands auf über 80 °C bei geeigneter Materialauswahl völlig unkritisch. Insofern weist gerade bei der Auswahl eines dermaßen belasteten Bauteils der erfindungsgemäße Gegenstand einen großen Vorteil gegenüber dem bisherigen Stand der Technik auf.

Mit großem Vorteil kann der erfindungsgemäße Gegenstand so angebracht werden, dass er eine Abdichtung ist. Gerade für abdichtende Bauteile werden meist filigrane und/oder kompliziert-geometrische Profilformen verlangt. Durch die überraschende Witterungsbeständigkeit des erfindungsgemäßen Gegenstands und die bekannte Möglichkeit der vielfältigen Verarbeitungsweise bietet sich der Einsatz des Gegenstands als Abdichtung an. Hierdurch können bisher eingesetzte Abdichtungen, die oft biologisch unverträglicher und/oder teurer sind, zu großem Teil ersetzt werden.

Der erfindungsgemäße Gegenstand kann auch dadurch vorteilhaft gekennzeichnet sein, dass er Einrichtungen zur Umwandlung der Sonnenenergie hält. Solche Einrichtungen müssen funktionsbedingt in möglichst hohem Maße der Sonne exponiert angebracht sein. Daher werden für diese Verwendung hohe Anforderungen an die Materialeigenschaften gestellt, so dass bisher meist Aluminiumbauteile oder Bauteile aus nicht rostendem Metall oder Vollkunststoff eingesetzt werden. Mit diesen gehen jedoch ein hoher Preis und eine geringe Umweltverträglichkeit einher. Insbesondere in diesen Aspekten, aber auch in der Möglichkeit einer natürlichen Oberflächengestaltung, kommen die Vorteile des erfindungsgemäßen Gegenstands zur Geltung.

In einer besonders vorteilhaften Ausgestaltung des erfindungsgemäßen Gegenstands ist dieser dadurch gekennzeichnet, dass er einen Teil eines Solarkollektors bildet. Hier kann er beispielsweise in Form einer Profilleiste den Rahmen eines Solarkollektors bilden. Die oben beschriebenen Vorteile kommen in dieser Verwendung in besonders hohem Maße zur Geltung.

Generell sind jedoch überraschenderweise auch viele andere Außenanwendungen für den verwendeten Werkstoff möglich, die bisher aufgrund mechanischer, thermischer oder korrosionsbedingter Einschränkungen bevorzugt metallischen oder keramischen Werkstoffen zugänglich waren.

Am Anwendungsbeispiel eines Rahmenprofils für einen Solarkollektor zeigen in der Zeichnung
- Figur 1: eine perspektivische Ansicht eines Ausschnitts aus dem Rahmenprofil,
- Figur 2: eine perspektivische Ansicht eines Details des Rahmenprofils mit einem kommunizierend angebrachten Klemmprofil und einer festgeklemmten Glasscheibe,
- Figur 3: eine perspektivische Gesamtansicht eines Solarkollektors und
- Figur 4: eine perspektivische Ansicht eines Ausschnitts von zwei unmittelbar nebeneinander angeordneten Solarkollektoren.

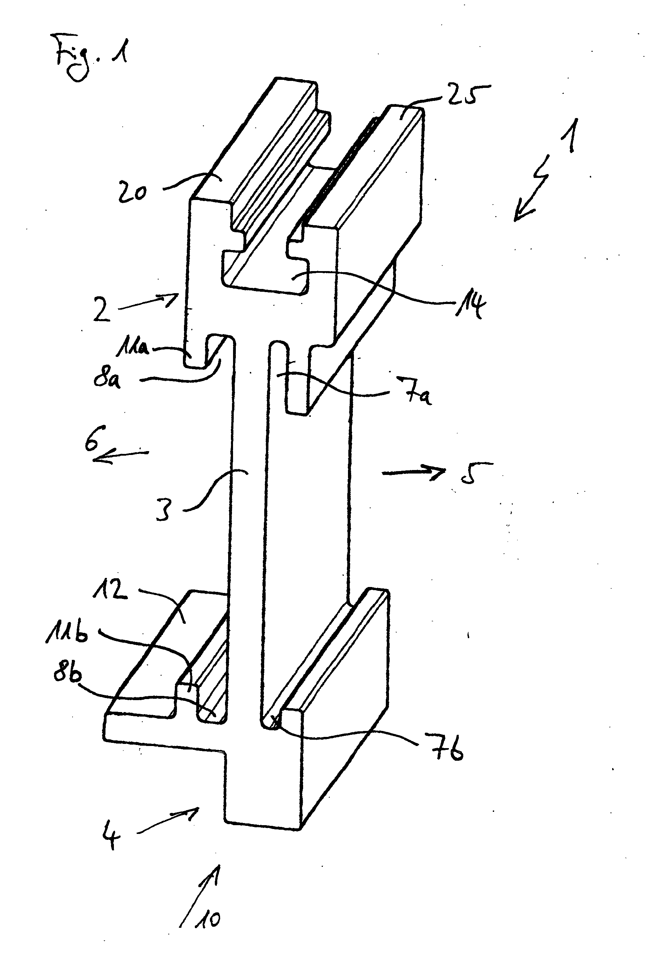

Wie aus Figur 1 ersichtlich ist, besteht das Rahmenprofil 1 im Wesentlichen aus einem Kopf 2, einem Steg 3 und einem Fuß 4. Dabei ist das Rahmenprofil 1 aus dem in der Erfindung verwendeten Holzwerkstoff extrudiert. In Bezug auf den Rahmen, aus dem Figur 1 einen Ausschnitt darstellt, zeigt die Richtung 5 die Außenseite und Richtung 6 die Innenseite des Rahmens an. An der Außenseite befinden sich die beiden Außennuten 7a und 7b. Auf der gegenüberliegenden Seite des Stegs 3 befinden sich die beiden Innennuten 8a und 8b. Die Außennuten 7a und 7b des Rahmenprofils 1 sind dazu vorgesehen, bei Bedarf Abdeckelemente aufzunehmen, die ihrerseits entsprechende Einrichtungen aufweisen, mit denen sie in den Außennuten 7a und 7b befestigt, vorzugsweise eingeschoben oder eingeklemmt, werden können. Hierdurch kann insbesondere der Steg 3 des Rahmenprofils 1 im Bedarfsfall verstärkt vor Außeneinflüssen, zum Beispiel UV-Strahlung, geschützt werden.

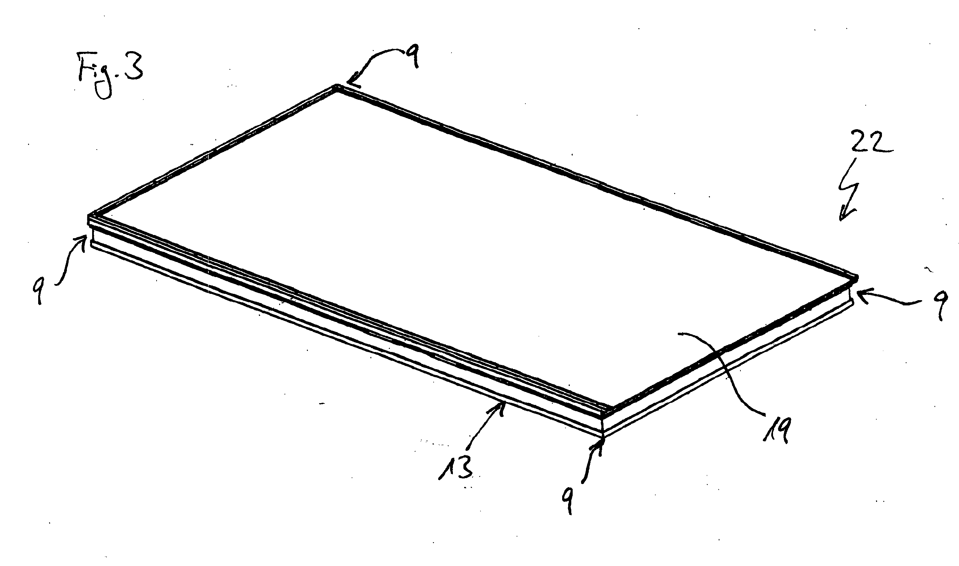

Die Innennuten 8a und 8b sind vorgesehen, um zur Konstruktion einer Rahmenecke 9 (vgl. Figur 3) ein weiteres Bauteil aufzunehmen. Dieses weitere Bauteil ist nicht abgebildet, entspricht aber im Wesentlichen einem herkömmlichen Winkelblech. Das Winkelblech kann vorzugsweise in die Innennuten 8a und 8b entlang der Einschubrichtung 10 eingeschoben werden. Auch hier ist jedoch denkbar, das Winkelblech unter Spannung zwischen den Vorsprüngen 11a und 11b hindurch zu drücken, sodass es in die Innennuten 8a und 8b fest einrastet. An das um vorzugsweise 90° versetzte gegenüberliegende Ende des Winkelblechs kann dann ein Verlängerungsprofil, welches den gleichen Querschnitt wie das Rahmenprofil 1 hat, in gleicher Weise angeschlossen werden.

Das Winkelblech kann hierbei auch aus dem beschriebenen Werkstoff durch Extrusion hergestellt sein.

Der Fuß 4 des Rahmenprofils 1 weist darüber hinaus eine Auflagefläche 12 auf. Diese ist im vorliegenden Ausführungsbeispiel dazu vorgesehen, eine Bodenplatte oder ein Bodenblech (nicht dargestellt) zu tragen. Ein vollständig zusammengesetzter Rahmen 13 (vgl. Figur 3) mit rechteckiger Form weist dann ebenfalls eine rechteckförmige Auflagefläche 12 für das Bodenblech auf, sodass dieses ebenfalls einfach rechteckig gestaltet sein kann. Selbstverständlich können auch mehrere Teilbodenbleche eingesetzt werden.

Der Kopf 2 des Rahmenprofils 1 weist insbesondere eine Führung 14 und zwei Auflageflächen 20, 25 auf.

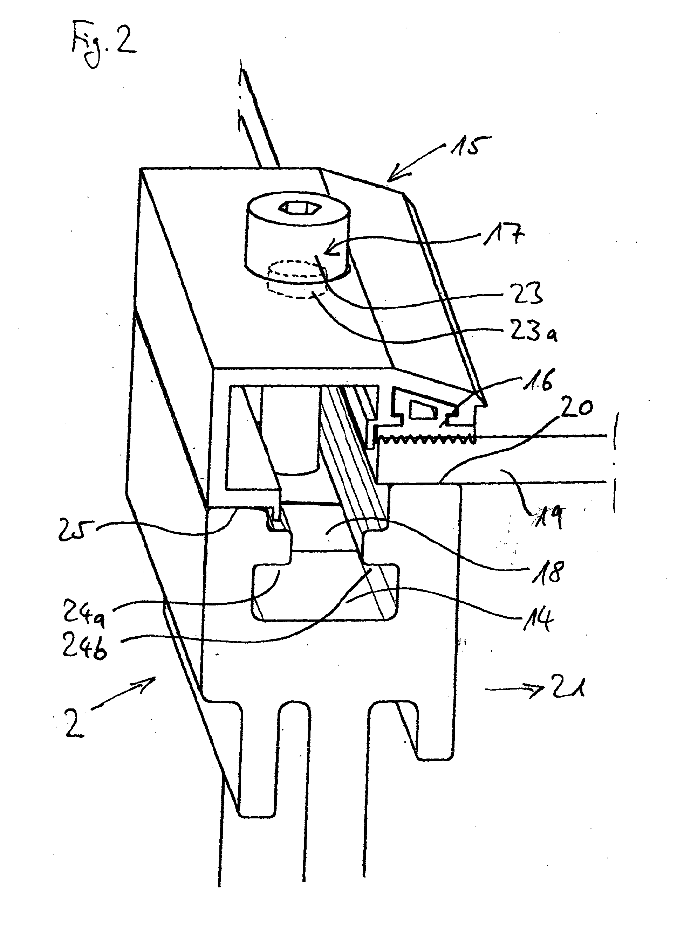

Figur 2 zeigt abermals den Kopf 2 des Rahmenprofils 1, hier allerdings in Verwendung. Im gezeigten Ausführungsbeispiel wirkt der Kopf 2 mit einem Klemmprofil 15 aus Aluminium, einem Dichtungsprofil 16, einer Befestigungsschraube 17 sowie einer Mutter 18 zusammen, um eine Glasscheibe 19 unter Spannung zwischen dem Dichtungsprofil 16 und der Auflagefläche 20 zu halten. Die Glasscheibe 19 überspannt hierbei den Innenraum 21 des zusammengesetzten Solarkollektors 22 (vgl. Figur 3).

Wie gut zu erkennen ist, weist das Klemmprofil 15 eine Öffnung 23a auf, die in der Figur 2 jedoch durch den Schraubenkopf 23 verdeckt ist. Die Mutter 18 ist entlang der Führung 14 frei verschiebbar. Durch Anziehen der Befestigungsschraube 17 gerät das Klemmprofil 15 unter Spannung, da die Mutter 18 durch die Führungsbegrenzung 24a und 24b an einer Bewegung entlang der Achse der Befestigungsschraube 17 gehindert wird. Folglich wandert der Schraubenkopf 23 beim Anziehen in Richtung der Mutter 18 und verformt das Klemmprofil 15 elastisch. Die hierzu erforderlichen Widerlager findet das Klemmprofil 15 über das Dichtungsprofil 16 und die Glasscheibe 19 auf der Auflagefläche 20 sowie zum Teil auch auf der Klemmauflage 25.

Durch die hohen Kräfte, mit der das Dichtungsprofil 16 auf die Glasscheibe 19 gepresst wird, entsteht eine zuverlässige Abdichtung. Das Dichtungsprofil 16 kann hierbei ein erfindungsgemäßes thermoplastisch verformbares Formteil sein.

Es versteht sich, dass eine solche Anordnung aus einem Rahmenprofil 1 und einem Klemmprofil 15 sowie auch die Anordnung von zwei jeweils zusammenwirkenden Nutenpaaren 7a, 7b bzw. 8a, 8b auf gegenüberliegenden Seiten des Stegs 3 auch unabhängig von der Verwendung als Rahmenbauteil für einen Solarkollektor und sogar unabhängig von der angemeldeten Erfindung erfinderisch sind.

Der in Figur 3 zu sehende Solarkollektor 22 umfasst einen vollständig zusammengesetzten Rahmen 13 in rechteckiger Form mit vier Rahmenecken 9, einer Glasscheibe 19 und einem Bodenblech (nicht sichtbar). Im Innenraum des Solarkollektors 22, der durch den Rahmen 13, die Glasscheibe 19 und das Bodenblech gebildet wird, befinden sich Einrichtungen zur Umwandlung von Sonnenenergie.

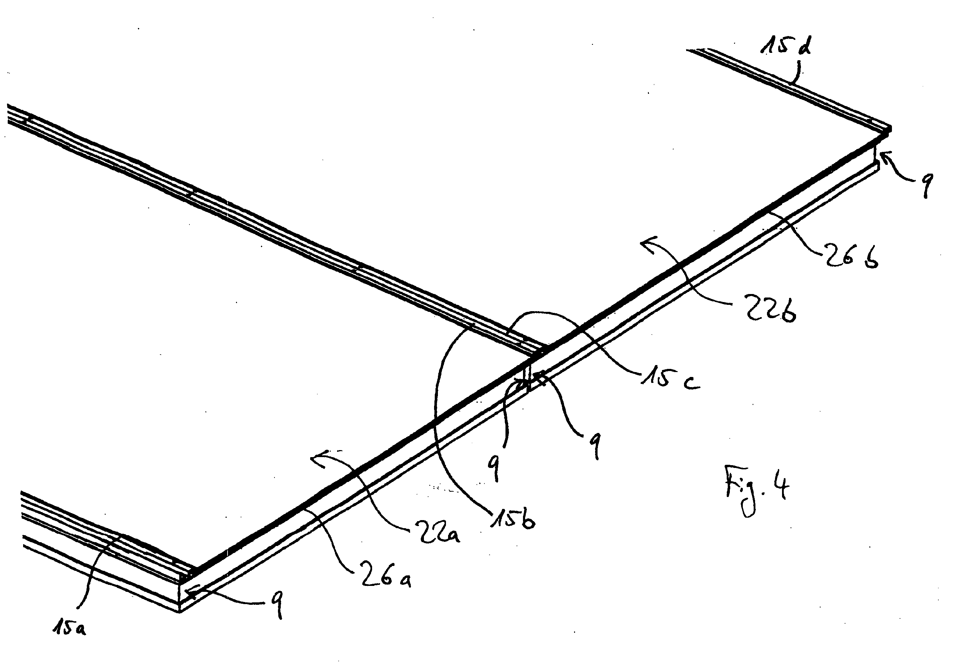

In Figur 4 ist deutlich zu sehen, dass im gewählten Anwendungsfall eines Solarkollektors üblicherweise mehrere Solarkollektoren 22a, 22b unmittelbar nebeneinander angeordnet sind. Im gezeigten Beispiel weisen die Solarkollektoren 22a und 22b nur jeweils zwei Klemmprofile 15a und 15b, bzw. 15c und 15d auf.

Selbstverständlich können die Rahmen jedoch auch entlang der freien Kanten 26a und 26b weitere Klemmprofile 15 aufweisen. Gleiches gilt für den freien Kanten 26a und 26b gegenüberliegende Kanten.

## Patentansprüche

1. Im Außenbereich angebrachter Gegenstand, ***dadurch gekennzeichnet, dass*** der Gegenstand ein thermoplastisch verformbares Formteil aufweist, das eine Holzmatrix und einen thermoplastischen Werkstoff aufweist.

2. Gegenstand nach Anspruch 1, ***dadurch gekennzeichnet, dass*** der Gegenstand ein extrudiertes Formteil aufweist.

3. Gegenstand nach Anspruch 2, ***dadurch gekennzeichnet, dass*** das extrudierte Formteil tiefgezogen ist.

4. Gegenstand nach Anspruch 2, ***dadurch gekennzeichnet*, *dass*** der Gegenstand ein mittels Coextrusion mit dem extrudierten Formteil geformtes Passformteil aufweist.

5. Gegenstand nach einem der vorhergehenden Ansprüche, ***dadurch gekennzeichnet, dass*** das thermoplastisch verformbare Formteil eine spiegelgeschweißte Verbindung mit einem weiteren Formteil aufweist.

6. Gegenstand nach einem der vorhergehenden Ansprüche, ***dadurch gekennzeichnet, dass*** das thermoplastisch verformbare Formteil eine geklebte Verbindung mit einem weiteren Formteil aufweist.

7. Gegenstand nach einem der vorhergehenden Ansprüche, ***dadurch gekennzeichnet*, *dass*** das thermoplastisch verformbare Formteil ganzjährig der Witterung ausgesetzt ist.

8. Gegenstand nach Anspruch 7, ***dadurch gekennzeichnet*, *dass*** zumindest ein Teil einer der Witterung ausgesetzten Oberfläche des thermoplastisch verformbaren Formteils seit seiner Formgebung unbehandelt ist.

9. Gegenstand nach Anspruch 7 oder 8, ***d*a*durch gekennzeichnet*, *dass*** der Gegenstand an einer Außenhülle eines Gebäudes angebracht ist.

10. Gegenstand nach einem der vorhergehenden Ansprüche, ***dadurch gekennzeichnet*, *dass*** er eine im Wesentlichen flächige Form hat und die Projektion der Normalen zu dieser flächigen Form in die Horizontale mit der Himmelsrichtung, in welcher vom Ort der Anbringung aus gesehen die Sonne ihren Höchststand hat, einen Winkel zwischen 0° und 45° einschließt.

11. Gegenstand nach einem der vorhergehenden Ansprüche, ***dadurch gekennzeichnet*, *dass*** er eine im Wesentlichen flächige Form hat und die Normale zu dieser flächigen Form mit der Horizontalen einen Winkel zwischen 10° und 90° einschließt.

12. Gegenstand nach einem der vorhergehenden Ansprüche, ***dadurch gekennzeichnet, dass*** das Profilteil eine Fluidleitung berührt, deren Oberfläche regelmäßig eine Temperatur oberhalb von 80°C annimmt.

13. Gegenstand nach einem der vorhergehenden Ansprüche, ***dadurch gekennzeichnet, dass*** er eine Abdichtung ist.

14. Gegenstand nach einem der vorhergehenden Ansprüche, ***dadurch gekennzeichnet*, *dass*** er Einrichtungen zur Umwandlung der Sonnenenergie hält.

15. Gegenstand nach einem der vorhergehenden Ansprüche, ***dadurch gekennzeichnet*, *dass*** er einen Teil eines Solarkollektors bildet.
